# EUROPEAN PATENT APPLICATION

(11) **EP 2 947 825 A1**
(43) Date of publication of application: **25.11.2015**
(21) Application number: 13877276.9
(22) Date of filing: 08.03.2013
(51) Int. Cl.: H04L 12/58, H04L 12/18, H04N 7/15

(54) **VIDEO COMMUNICATION METHOD, HOME TERMINAL AND HOME SERVER**

(71) Applicant: Huawei Device Co., Ltd., Shenzhen, Guangdong 518129 (CN)
(72) Inventor: HE, Zhiqin, Shenzhen Guangdong 518129 (CN)
(74) Representative: Epping - Hermann - Fischer
(86) International application number: PCT/CN2013/072336
(87) International publication number: WO 2014/134820

(57) **Abstract**

Embodiments of the present invention provide a home video communication method, where the method includes: sending, by a home terminal, a detection message to a home server, where the detection message carries user account information; receiving, by the home server, the detection message that carries the user account information and is sent by the home terminal; performing, by the home server, matching on the account information, and returning a video communication homepage to the home terminal after the matching is successful; receiving, by the home terminal, the video communication homepage returned by the home server, and establishing a socket Socket connection to the home server by using the video communication homepage and a browser that supports web-based real time communication; and interacting, by the home terminal, with a WebRTC proxy of the home server by using a web-based real time communication WebRTC application and by means of the Socket connection, so as to implement video communication.

## Description

### TECHNICAL FIELD

The present invention relates to the communications field, and in particular, to a video communication method, a home terminal, and a home server.

### BACKGROUND

A home server (home server) is a home data center, is connected to the outside by using a network cable and a telephone line, and is connected to another device in a home, that is, a home terminal, by using various cables, so as to achieve an objective of centrally storing and sharing data. With development of audio and video technologies, more terminal users use a video communication function. In the prior art, there are two manners of performing video communication. One is that the video communication function is implemented by using a dedicated video communication client, such as QQ and Skype; in this manner, the video communication client needs to adapt to various home terminals and OSs (Operating System, operating system), compatibility of the video communication client is relatively poor, and a cost of developing the video communication client is high.

With development of a WebRTC (WEB-based Real Time Communication, web-based real time communication) technology, a home terminal may also perform video communication in another manner, that is, the home terminal performs video communication by means of WebRTC. Specifically, the home terminal implements a video communication service directly based on WebRTC by using a browser on the home terminal and cooperating with an Internet server. However, the manner in which the home terminal implements a video communication service directly based on WebRTC by using a browser on the home terminal and cooperating with an Internet server is only suitable for a stand-alone video communication service, and therefore, video communication sharing within a home or another home video communication service such as a multi-terminal video conference within a home cannot be implemented if needed.

### SUMMARY

An objective of embodiments of the present invention is to provide a method for performing video communication in a home network, a home terminal, a home server, and a home video communication system, so as to resolve a problem in compatibility of video communication software with various operating systems of a home terminal, and conveniently implement various video communication services within a home.

According a first aspect, a method for performing video communication in a home network is provided, where the method includes:
sending, by a home terminal, a detection message to a home server, where the detection message carries user account information, receiving a video communication homepage returned by the home server, and establishing a socket Socket connection to the home server by using the video communication homepage and a browser that supports web-based real time communication; and
performing, by the home terminal, video communication with another terminal by using a web-based real time communication WebRTC application, by means of the Socket connection, and by using a WebRTC proxy of the home server.

In a first possible implementation manner, according to the first aspect, the performing, by the home terminal, video communication with another terminal by using a web-based WebRTC application, by means of the Socket connection, and by using a WebRTC proxy of the home server is specifically:
initiating, by the home terminal, a video communication call request to the WebRTC proxy of the home server by means of the Socket connection and according to a call number that is input by a user by using the WebRTC application, so that the WebRTC proxy triggers a call signaling control module of the home server to initiate a video communication call and perform call connection; and
establishing, by the WebRTC application, a video communication media stream within a home with the WebRTC proxy by means of the Socket connection and according to a notification of the WebRTC proxy, where when the WebRTC proxy establishes a video communication media steam with the call signaling control module, the WebRTC proxy instructs, according to triggering of the call signaling control module, the WebRTC application to establish the video communication media stream within the home with the WebRTC proxy.

In a second possible implementation manner, with reference to the first possible implementation manner, when a format of the video communication media stream within the home is different from a format of a video communication media stream outside the home, the WebRTC proxy performs conversion from the format of the video communication media stream within the home to the format of the video communication media stream outside the home, or conversion from the format of the video communication media stream outside the home to the format of the video communication media stream within the home.

In a third possible implementation manner, with reference to the first aspect, the performing, by the home terminal, video communication with another terminal by using a web-based WebRTC application, by means of the Socket connection, and by using a WebRTC proxy of the home server is specifically:
receiving, by the home terminal by using the WebRTC application and by means of the Socket connection, a video communication call initiated by the WebRTC proxy, where the video communication call is initiated by means of triggering the WebRTC proxy by using a call signaling control module of the home server; and
returning, by the WebRTC application to the WebRTC proxy according to a user response, information that a user responds to the call, so that the WebRTC proxy invokes, by using an internal system, the call signaling control module to return user answer signaling to a caller, so as to establish a video communication media stream between the home terminal and the home server.

In a fourth possible implementation manner, with reference to the first aspect, the performing, by the home terminal, video communication with another terminal by using a web-based WebRTC application, by means of the Socket connection, and by using a WebRTC proxy of the home server is specifically:
initiating, by the home terminal, a video communication call request to the WebRTC proxy by means of the Socket connection and according to a call number that is input by a user by using the WebRTC application, where the video call communication request carries a number of a target home terminal to which a call is transferred, so that the WebRTC proxy redirects a video communication media stream that points to the home terminal to the target home terminal.

In a fifth possible implementation manner, with reference to the first aspect, the performing, by the home terminal, video communication with another terminal by using a web-based WebRTC application, by means of the Socket connection, and by using a WebRTC proxy of the home server is specifically:
initiating, by the home terminal, a video communication call request to the WebRTC proxy by means of the Socket connection and according to a call number that is input by a user by using the WebRTC application, where the video call communication request carries a number of a target home terminal to which a call is transferred, so that the WebRTC proxy of the home server triggers a call signaling control module to initiate a video communication call to the target home terminal according to the number of the target home terminal; after a user of the target home terminal opts to accept the call and responds, receiving, by the WebRTC proxy module, a video communication media stream from the home terminal and a video communication media stream from the target terminal at the same time, combining, by the WebRTC proxy by means of encoding, the video communication media stream from the home terminal and the video communication media stream from the target terminal, and then sending a combined video communication media stream to a video communication peer end.

According to a second aspect, a video communication method is provided, where the method includes:
receiving, by a home server, a detection message that carries user account information and is sent by a home terminal, performing, by the home server, matching on the account information, and returning a video communication homepage to the home terminal after the matching is successful, so that the home terminal establishes a socket Socket connection to the home server by using the video communication homepage and a browser that supports web-based real time communication; and
enabling, by a WebRTC proxy of the home server by using web-based real time communication WebRTC and by means of the Socket connection, the home terminal to perform video communication with another terminal.

In a first possible implementation manner, according to the second aspect, the enabling, by a WebRTC proxy of the home server by using a web-based real time communication WebRTC application and by means of the Socket connection, the home terminal to perform video communication with another terminal is specifically:
receiving, by the WebRTC proxy, a video communication call request of the home terminal, where the video communication call request is initiated by means of the Socket connection and according to a call number that is input by a user by using the WebRTC application;
triggering, by the WebRTC proxy, a call signaling control module to initiate a video communication call and perform call connection; and
when the call signaling control module establishes a video communication media stream with the WebRTC proxy, establishing, by the WebRTC proxy, a video communication media stream within a home with the WebRTC application of the home terminal according to triggering of the call signaling control module.

In a second possible implementation manner, with reference to the first possible implementation manner, when a format of the video communication media stream within the home is different from a format of a video communication media stream outside the home, the WebRTC proxy performs conversion from the format of the video communication media stream within the home to the format of the video communication media stream outside the home, or conversion from the format of the video communication media stream outside the home to the format of the video communication media stream within the home.

In a third possible implementation manner, with reference to the second aspect, the enabling, by a WebRTC proxy of the home server by using a web-based real time communication WebRTC application and by means of the Socket connection, the home terminal to perform video communication with another terminal is specifically:
initiating, by the WebRTC proxy, a video communication call to the home terminal according to triggering of a signaling call module, and triggering, by the call signaling module, the WebRTC proxy after receiving the video communication call initiated to the home terminal;
triggering, by the WebRTC proxy according to call answer information returned by the WebRTC application of the home terminal, a call signaling control module to return user answer signaling, so as to establish a video communication media stream between the home terminal and the home server, where the call answer information returned by the WebRTC application is returned by the WebRTC application according to a user response; and
when the call signaling control module establishes a video communication media stream with the WebRTC proxy, establishing, by the WebRTC proxy, a video communication media stream within a home with the WebRTC application of the home terminal according to triggering of the call signaling control module.

In a fourth possible implementation manner, with reference to the second aspect, the enabling, by a WebRTC proxy of the home server by using a web-based real time communication WebRTC application and by means of the Socket connection, the home terminal to perform video communication with another terminal is specifically:
receiving, by the WebRTC proxy, a video communication call request of the home terminal, where the video communication call request is initiated by means of the Socket connection and according to a call number that is input by a user by using the WebRTC application, and the video call communication request carries a number of a target home terminal to which a call is transferred;
initiating, by the WebRTC proxy, a video communication call to the target home terminal according to the number of the target home terminal; and
redirecting, by the WebRTC proxy after receiving a message indicating that a user of the target home terminal opts to accept the call and responds, a video communication media stream that points to the home terminal to the target home terminal.

In a fifth possible implementation manner, with reference to the second aspect, the enabling, by a WebRTC proxy of the home server by using a web-based real time communication WebRTC application and by means of the Socket connection, the home terminal to perform video communication with another terminal is specifically:
receiving, by the WebRTC proxy, a video communication call request of the home terminal, where the video communication call request is initiated by means of the Socket connection and according to a call number that is input by a user by using the WebRTC application, and the video call communication request carries a number of a target home terminal to which a call is transferred;
initiating, by the WebRTC proxy, a video communication call to the target home terminal according to the number of the target home terminal; and
receiving, by the WebRTC proxy, a video communication media stream from the home terminal and a video communication media stream from the target terminal at the same time after receiving a message indicating that a user of the target home terminal opts to accept the call and responds, combining, by means of encoding, the video communication media stream from the home terminal and the video communication media stream from the target terminal, and then sending a combined video communication media stream to a video communication peer end.

According to a third aspect, a home terminal is provided, where the home terminal includes:
a connection establishing unit, configured to send a detection message to a home server, where the detection message carries user account information, receive a video communication homepage returned by the home server, and establish a socket Socket connection to the home server by using the video communication homepage and a browser that supports web-based real time communication;
a video communication processing unit, configured to perform video communication with another terminal by using a web-based real time communication WebRTC application, by means of the Socket connection, and by using a WebRTC proxy of the home server;
a monitor, which is connected to the video communication processing unit, and is configured to display video information that is of a video communication peer end and processed by the video communication processing unit to a user of the home terminal;
a microphone, which is connected to the video communication processing unit, and is configured to transmit audio information of the user of the home terminal to the video communication processing unit in a video communication process; and
a headset or loudspeaker, which is connected to the video communication processing unit, and is configured to play audio information that is of the video communication peer end and processed by the video communication processing unit to the user of the home terminal.

In a first possible implementation manner, with reference to the third aspect, that the video communication unit performs video communication with another terminal by using the web-based real time communication WebRTC application, by means of the Socket connection, and by using the WebRTC proxy of the home server is specifically that:
the home terminal initiates a video communication call request to the WebRTC proxy of the home server by means of the Socket connection and according to a call number that is input by a user by using the WebRTC application, so that the WebRTC proxy triggers a call signaling control module of the home server to initiate a video communication call and perform call connection; and
the WebRTC application establishes a video communication media stream within a home with the WebRTC proxy by means of the Socket connection and according to a notification of the WebRTC proxy, where when the WebRTC proxy establishes a video communication media steam with the call signaling control module, the WebRTC proxy instructs, according to triggering of the call signaling control module, the WebRTC application to establish the video communication media stream within the home with the WebRTC proxy;
or,
the home terminal receives, by using the WebRTC application and by means of the Socket connection, a video communication call initiated by the WebRTC proxy, where the video communication call is initiated by means of triggering the WebRTC proxy by using a call signaling control module of the home server; and
the WebRTC application returns, to the WebRTC proxy according to a user response, information that a user responds to the call, so that the WebRTC proxy invokes, by using an internal system, the call signaling control module to return user answer signaling to a caller, so as to establish a video communication media stream between the home terminal and the home server;
or,
the home terminal initiates a video communication call request to the WebRTC proxy by means of the Socket connection and according to a call number that is input by a user by using the WebRTC application, where the video call communication request carries a number of a target home terminal to which a call is transferred, so that the WebRTC proxy redirects a video communication media stream that points to the home terminal to the target home terminal;
or,
the home terminal initiates a video communication call request to the WebRTC proxy by means of the Socket connection and according to a call number that is input by a user by using the WebRTC application, where the video call communication request carries a number of a target home terminal to which a call is transferred, so that the WebRTC proxy of the home server triggers a call signaling control module to initiate a video communication call to the target home terminal according to the number of the target home terminal; after a user of the target home terminal opts to accept the call and responds, the WebRTC proxy module receives a video communication media stream from the home terminal and a video communication media stream from the target terminal at the same time, and the WebRTC proxy combines, by means of encoding, the video communication media stream from the home terminal and the video communication media stream from the target terminal, and then sends a combined video communication media stream to a video communication peer end.

According to a fourth aspect, a home server is provided, where the home server includes:
a connection establishing unit, configured to receive a detection message that carries user account information and is sent by a home terminal, perform matching on the received account information, and return a video communication homepage to the home terminal after the matching is successful, so that the home terminal establishes a socket Socket connection to the home server by using the video communication homepage and a browser that supports web-based real time communication; and
a video communication unit, including a WebRTC proxy, where the WebRTC proxy enables, by using a web-based real time communication WebRTC application and by means of the Socket connection, the home terminal to perform video communication with another terminal.

In a first possible implementation manner, with reference to the fourth aspect, the video communication unit further includes a call signaling control module, and the WebRTC proxy receives a video communication call request of the home terminal, where the video communication call request is initiated by means of the Socket connection and according to a call number that is input by a user by using the WebRTC application; the WebRTC proxy triggers the call signaling control module to initiate a video communication call and perform call connection; and when the WebRTC proxy establishes a video communication media stream with the call signaling control module, the WebRTC proxy establishes a video communication media stream within a home with the WebRTC application of the home terminal according to triggering of the call signaling control module;
or,
the WebRTC proxy initiates a video communication call to the home terminal according to triggering of a signaling call module, and after receiving the video communication call initiated to the home terminal, the call signaling module triggers the WebRTC proxy; the WebRTC proxy triggers, according to call answer information returned by the WebRTC application of the home terminal, a call signaling control module to return user answer signaling, so as to establish a video communication media stream between the home terminal and the home server, where the call answer information returned by the WebRTC application is returned by the WebRTC application according to a user response; and when the call signaling control module establishes a video communication media stream with the WebRTC proxy, the WebRTC proxy establishes a video communication media stream within a home with the WebRTC application of the home terminal according to triggering of the call signaling control module;
or,
the WebRTC proxy receives a video communication call request of the home terminal, where the video communication call request is initiated by means of the Socket connection and according to a call number that is input by a user by using the WebRTC application, and the video call communication request carries a number of a target home terminal to which a call is transferred; the WebRTC proxy initiates a video communication call to the target home terminal according to the number of the target home terminal; and after receiving a message indicating that a user of the target home terminal opts to accept the call and responds, the WebRTC proxy redirects a video communication media stream that points to the home terminal to the target home terminal;
or,
the WebRTC proxy receives a video communication call request of the home terminal, where the video communication call request is initiated by means of the Socket connection and according to a call number that is input by a user by using the WebRTC application, and the video call communication request carries a number of a target home terminal to which a call is transferred; the WebRTC proxy initiates a video communication call to the target home terminal according to the number of the target home terminal; and after receiving a message indicating that a user of the target home terminal opts to accept the call and responds, the WebRTC proxy receives a video communication media stream from the home terminal and a video communication media stream from the target terminal at the same time, combines, by means of encoding, the video communication media stream from the home terminal and the video communication media stream from the target terminal, and then sends a combined video communication media stream to a video communication peer end.

According to a fifth aspect, a home video communication system is provided, where the home video communication system includes a home terminal and a home server; the home terminal sends a detection message to the home server, where the detection message carries user account information; the home server receives the detection message that carries the user account information and is sent by the home terminal; the home server performs matching on the account information, and returns a video communication homepage to the home terminal after the matching is successful; and the home terminal receives the video communication homepage returned by the home server, and establishes a socket Socket connection to the home server by using the video communication homepage and a browser that supports web-based real time communication; and
the home terminal interacts with a WebRTC proxy of the home server by using a web-based real time communication WebRTC application and by means of the Socket connection, so as to implement video communication.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a video communication method on a home terminal side according to an embodiment of the present invention;
FIG. 2 is a schematic flowchart of a video communication method on a home server side according to an embodiment of the present invention;
FIG. 3 is a diagram of interaction during which a home terminal establishes a Socket connection to a home server according to an embodiment of the present invention;
FIG. 4 is an interaction flowchart of a method embodiment in which a home terminal initiates video communication according to an embodiment of the present invention;
FIG. 5 is an interaction flowchart of a method embodiment in which a home terminal answers video communication according to an embodiment of the present invention;
FIG. 6 is a flowchart of video communication call transfer performed within a home according to an embodiment of the present invention;
FIG. 7 is a flowchart of multi-endpoint video communication inside a home terminal according to an embodiment of the present invention;
FIG. 8 is a schematic diagram of a home terminal according to an embodiment of the present invention;
FIG. 9 is a schematic diagram of a home server according to an embodiment of the present invention;
FIG. 10 is a schematic diagram of a video communication unit in a home server according to an embodiment of the present invention; and
FIG. 11 is a schematic diagram of a home video communication system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

A home terminal described in the present invention may be a mobile phone, a tablet computer, a notebook computer, a fixed station, a videophone, and another terminal that can perform communication. Another terminal described in the present invention may be another home terminal, or may be a terminal outside a home.

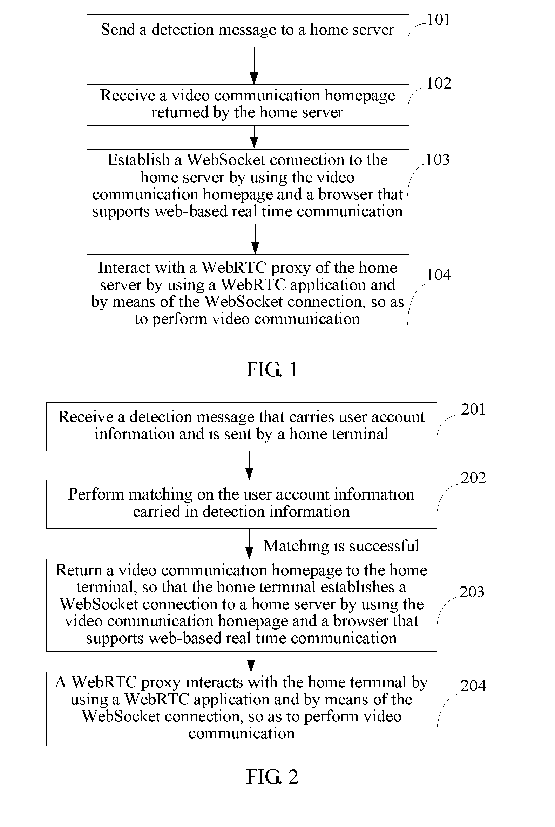

FIG. 1 is a flowchart of a method for performing video communication in a home network according to an embodiment of the present invention, where the method in FIG. 1 is performed by a home terminal.

101. Send a detection message to a home server.

When a user terminal enters a range of a home network (which is generally a WiFi connection), a user terminal device automatically connects to a WiFi network, and triggers detection on the home server after the connection is successful. The detection message may be an HTTP request; or may be a UPnP message, or another similar message that may be used to detect the home server by the user terminal; and carries user account information, where the user account information may be encrypted user account information. The foregoing detection message may further include a capability parameter of the home terminal, such as a quantity of camera pixels and an encoding/decoding capability, so that the home server may coordinate resources according to the capability parameter of the home terminal. After receiving the foregoing detection message, the home server performs matching on the user account information, and returns a video communication homepage to the user terminal device as soon as the matching is successful.

102. Receive a video communication homepage returned by the home server.

103. Establish a Socket connection to the home server by using the video communication homepage and a browser that supports web-based real time communication.

The user terminal runs, by using the browser for web-based real time communication, a JavaScript program built in the video communication homepage, and initiates the Socket connection to the home server, so as to complete a user login process.

104. Perform video communication with another terminal by using a WebRTC application, by means of the Socket connection, and by using a WebRTC proxy of the home server.

The user terminal interacts with the WebRTC proxy of the home server by using the WebRTC application and by means of the Socket connection, so as to implement video call initiating, video call answering, video communication transfer within a home, and multi-endpoint video communication within the home.

The Socket connection described in this embodiment may be a websocket WebSocket connection.

It can be seen from the foregoing description that in the foregoing embodiment, a user terminal performs video communication with another terminal by using a WebRTC application, a Socket connection, and a WebRTC proxy of a home server, so that a user terminal in a home only needs a browser for web-based real time communication to implement video communication, and does not need to particularly install a dedicated video communication client to implement video communication.

As shown in FIG. 2, is a flowchart of a method for performing video communication in a home network according to another embodiment of the present invention, where the method shown in FIG. 2 is performed by a home server.

201. Receive a detection message that carries user account information and is sent by a home terminal.

When a user terminal enters a range of a home network (which is generally a WiFi connection), a user terminal device automatically connects to a WiFi network, and triggers detection on the home server after the connection is successful. The detection message may be an HTTP request; or may be a UPnP message, or another similar message that may be used to detect the home server by the user terminal; and carries user account information, where the user account information may be encrypted. The foregoing detection message may further include a capability parameter of the user terminal, such as a quantity of camera pixels and an encoding/decoding capability, so that the home server may coordinate resources according to the capability parameter of the home terminal.

202. Perform matching on the user account information carried in detection information.

After receiving the foregoing detection message, the home server performs matching on the user account information, and returns a video communication homepage to the user terminal device as soon as the matching is successful.

203. Return a video communication homepage to the home terminal, so that the home terminal establishes a Socket connection to the home server by using the video communication homepage and a browser that supports web-based real time communication.

204. A WebRTC proxy enables, by using a WebRTC application and by means of the Socket connection, the home terminal to perform video communication with another terminal.

The user terminal runs, by using the browser for web-based real time communication, a JavaScript program built in the video communication homepage, and initiates the Socket connection to the home server, so as to complete user login. After the user terminal establishes the Socket connection to the home server, the WebRTC proxy of the home terminal exchanges with the home terminal by using the WebRTC application and by means of the Socket connection, so as to implement video call initiating, video call answering, video communication transfer within a home, and multi-endpoint video communication within the home.

The Socket connection described in this embodiment may be a websocket WebSocket connection.

It can be seen from the foregoing description that in the foregoing embodiment, a WebRTC proxy of a home server enables, by using a WebRTC application and a Socket connection that is established to a home terminal, the home terminal to perform video communication with another terminal, so that a user terminal in a home only needs a browser for web-based real time communication to implement video communication, and does not need to particularly install a dedicated video communication client to implement video communication.

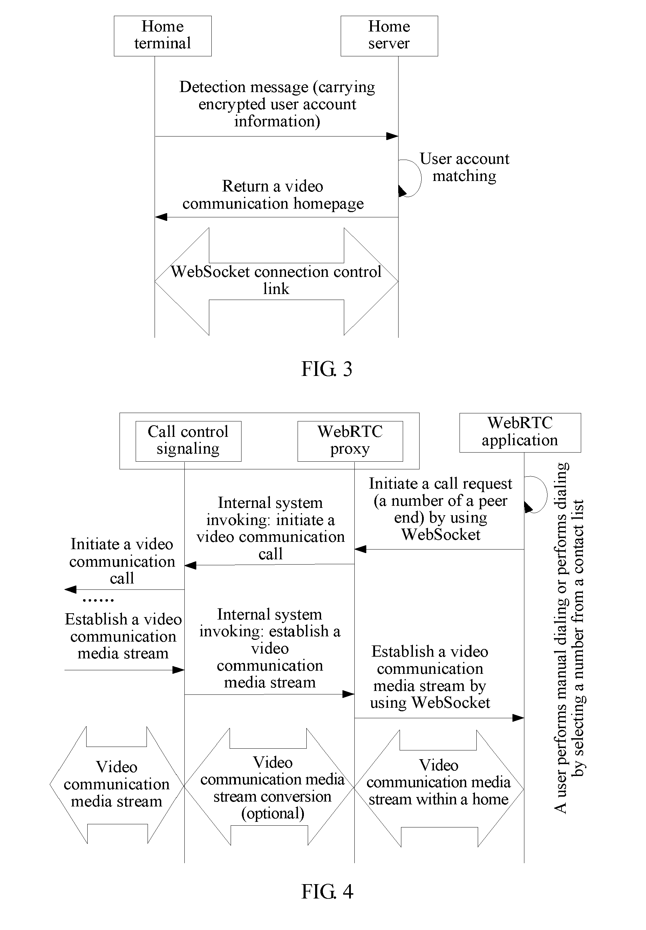

As shown in FIG. 3, is a diagram of interaction during which a home terminal establishes a Socket connection to a home server according to another embodiment of the present invention.

As shown in FIG. 3, when a user terminal enters a range of a home network (which is generally a WiFi connection), a user terminal device automatically connects to a WiFi network (which is not shown in the figure), and triggers detection on the home server after the connection is successful. The detection message may be an HTTP request; or may be a UPnP message, or another similar message that may be used to detect the home server by the user terminal; and carries encrypted user account information. The foregoing detection message may further include a capability parameter of the user terminal, such as a quantity of camera pixels and an encoding/decoding capability, so that the home server may coordinate resources according to the capability parameter of the home terminal. After receiving the foregoing detection message, the home server performs matching on the user account information, and returns a video communication homepage to the user terminal device as soon as the matching is successful. After the home terminal receives the video communication homepage returned by the home server, the user terminal runs, by using a browser for web-based real time communication, a JavaScript program built in the video communication homepage, and initiates the Socket connection to the home server, so as to complete a user login process. The Socket connection described in this embodiment may be a websocket WebSocket connection.

As shown in FIG. 4, FIG. 4 is an interaction flowchart of a method embodiment in which a home terminal initiates video communication according to an embodiment of the present invention.

When a user of a home terminal needs to make a video call to a user of a terminal outside a home, the user of the home terminal runs, by using a browser that supports web-based real time communication, a JavaScript program built in the video communication homepage, and initiates a Socket connection to a home server, so as to complete user login; then, the user of the home terminal performs manual dialing on a page of a WebRTC application, or performs dialing by selecting a number from a contact list or call records, where the contact list may be a contact list or call records of the home terminal, or may be a contact list or call records shared by another home terminal within the home by using the home server. After the user completes dialing, the WebRTC application initiates a call request to a WebRTC proxy by using a Socket according to a number dialed by the user, and the WebRTC proxy invokes and triggers, by using an internal system and at a home server end, a call control signaling module of the home server to initiate a video communication call. In a subsequent call process, the call signaling control module performs call connection, and when the call signaling module establishes a video communication media stream with the WebRTC proxy, the call signaling control module triggers the WebRTC proxy to instruct the WebRTC application of a user terminal to establish a video communication media stream within the home, thereby completing a process of performing media stream transmission from the WebRTC proxy to the WebRTC application. Generally, as soon as the call signaling module establishes a video communication media stream with the WebRTC proxy, the call signaling module triggers the WebRTC proxy to instruct the WebRTC application of the user terminal to establish a video communication media stream within the home. However, it is not excluded that after establishing a video communication media stream with the WebRTC proxy, the call signaling module triggers the WebRTC proxy to instruct the WebRTC application of the user terminal to establish a video communication media stream within the home. When a format of the video communication media stream within the home is the same as a format that is of a video communication media stream and required by a receive end, the WebRTC proxy sends the video communication media stream. When the format of the video communication media stream within the home is different from a format that is of a video communication media stream and required by a call object end of the home terminal, the WebRTC proxy converts the format of the video communication media stream sent by the home terminal, and then sends to the call object end; or the WebRTC proxy converts a format of a video communication media stream forwarded by the call object end by using the call signaling control module, and then sends a converted video communication media stream to the home terminal. The Socket connection described in this embodiment may be a websocket WebSocket connection.

It can be seen from the foregoing description that in the foregoing embodiment, a home terminal makes a video call to another terminal by using a WebRTC application, a Socket connection, and a WebRTC proxy of a home server, so that a user terminal in a home only needs a browser for web-based real time communication to implement a video call, and does not need to particularly install a dedicated video communication client to implement video communication.

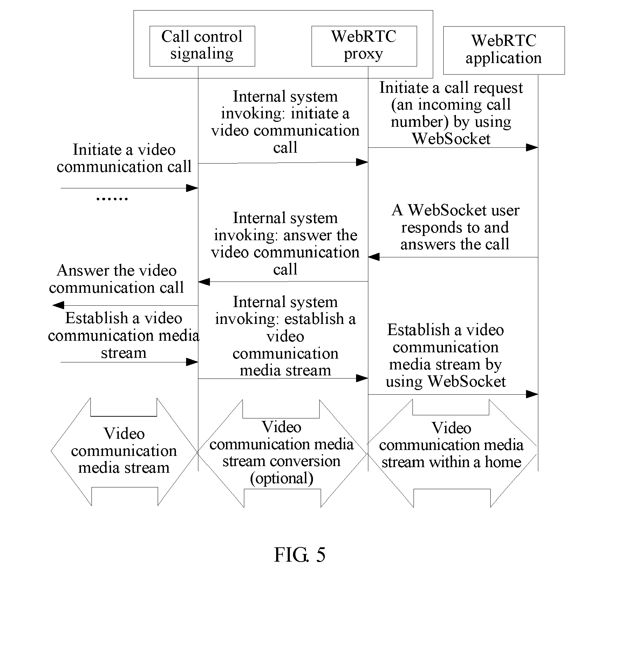

As shown in FIG. 5, FIG. 5 is an interaction flowchart of a method embodiment in which a home terminal answers video communication according to an embodiment of the present invention.

When an external user makes a call to a terminal within a home, a call signaling control module of a home server receives the call request, and the call signaling control module invokes and triggers, by using an internal system, a WebRTC proxy module to initiate a video communication call. A home user responds to and answers the call, a WebRTC application of the home terminal returns a message that the user responds to and answers the call, a WebRTC proxy invokes and triggers, by using the internal system, the call signaling control module to return one piece of user answer signaling, so as to complete entire signaling interaction of an incoming call service. When establishing a video communication media stream, the call signaling control module inversely triggers the WebRTC proxy to instruct a WebRTC application of a user terminal to establish a video communication media stream within a home, thereby completing a process of performing media stream transmission by the WebRTC proxy. When a format of the video communication media stream within the home is the same as a format that is of a video communication media stream and required by a receive end, the WebRTC proxy sends the video communication media stream. When the format of the video communication media stream within the home is different from a format that is of a video communication media stream and required by a call object end of the home terminal, the WebRTC proxy converts the format of the video communication media stream sent by the home terminal, and then sends a converted video communication media stream to the call object end; or the WebRTC proxy converts a format of a video communication media stream forwarded by the call object end by using the call signaling control module, and then sends a converted video communication media stream to the home terminal. The Socket connection described in this embodiment may be a websocket WebSocket connection.

It can be seen from the foregoing description that in the foregoing embodiment, a home terminal answers a video call by using a WebRTC application, a Socket connection, and a WebRTC proxy of a home server, so that a user terminal in a home only needs a browser for web-based real time communication to implement video communication, and does not need to particularly install a dedicated video communication client to implement video communication.

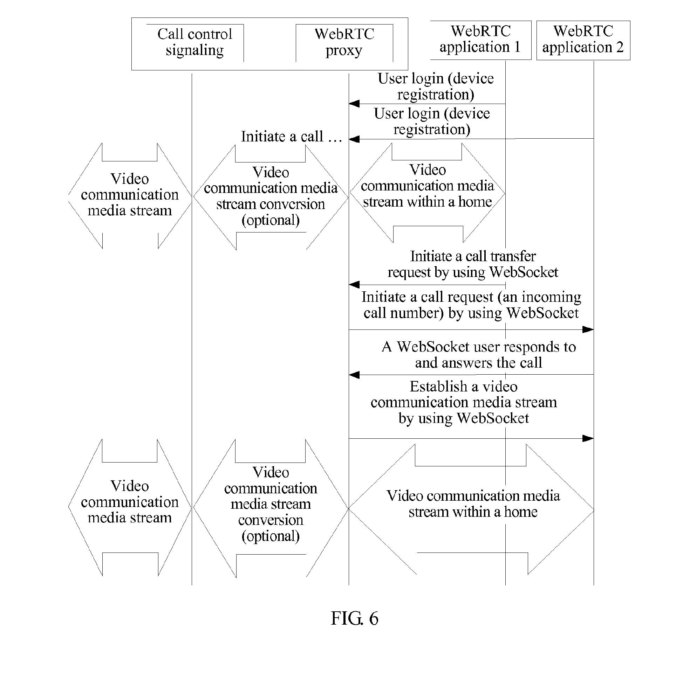

As shown in FIG. 6, FIG. 6 is a flowchart of video communication call transfer performed within a home according to an embodiment of the present invention.

As shown in FIG. 6, all interaction of a call transfer service based on a WebRTC proxy only needs to be completed inside a home network. As shown in the figure, WebRTC application 1 and WebRTC application 2 respectively run on home terminal 1 and home terminal 2. Both home terminal 1 and home terminal 2 have been registered to a WebRTC proxy on a home server, and home terminal 1 and home terminal 2 separately have a terminal number within a home. When home terminal 1 is performing video communication, a user of home terminal 1 opts to transfer the call to home terminal 2, and then the WebRTC application of home terminal 1 initiates a call transfer request to the WebRTC proxy of the home server by using a Socket connection, where the call transfer request carries a terminal number within the home of home terminal 2, and the WebRTC proxy initiates a call to home terminal 2 by using a Socket connection established by the WebRTC proxy to home terminal 2 and according to the terminal number within the home that is of home terminal 2 and carried in the call transfer request; a user of home terminal 2 responds to and answers the call, WebRTC application 2 of home terminal 2 returns a message indicating that the user responds to and answers the call, and then the WebRTC proxy redirects a video communication media stream that originally points to WebRTC application 1 to WebRTC application 2, thereby implementing video communication call transfer within the home. When a format of the video communication media stream within the home is the same as a format that is of a video communication media stream and required by a receive end, the WebRTC proxy sends the video communication media stream. When the format of the video communication media stream within the home is different from a format that is of a video communication media stream and required by a call object end of the home terminal, the WebRTC proxy converts the format of the video communication media stream sent by the home terminal, and then sends a converted video communication media stream to the call object end; or the WebRTC proxy converts a format of a video communication media stream forwarded by the call object end by using the call signaling control module, and then sends a converted video communication media stream to the home terminal. The Socket connection described in this embodiment may be a websocket WebSocket connection.

It can be seen from the foregoing description that in the foregoing embodiment, a home terminal transfers a video call by using a WebRTC application, a Socket connection, and a WebRTC proxy of a home server, so that a user terminal in a home only needs a browser for web-based real time communication to implement video communication, and does not need to particularly install a dedicated video communication client to implement video communication.

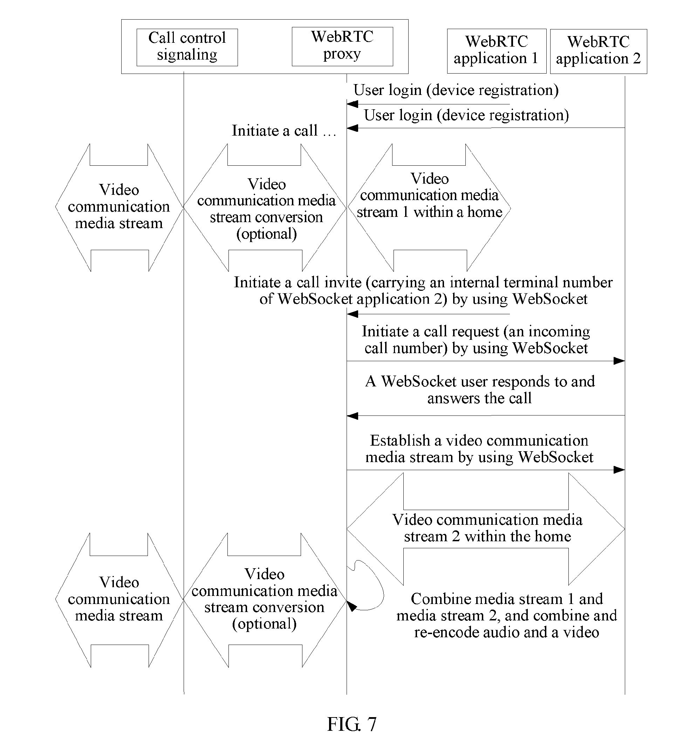

As shown in FIG. 7, FIG. 7 is a flowchart of multi-endpoint video communication inside a home terminal according to an embodiment of the present invention.

As shown in the figure, WebRTC application 1 and WebRTC application 2 respectively run on home terminal 1 and home terminal 2. Both home terminal 1 and home terminal 2 have been registered to a WebRTC proxy on a home server, and home terminal 1 and home terminal 2 separately have a terminal number within a home. When home terminal 1 is performing video communication, a user of home terminal 1 opts to invite home terminal 2 to join a conference, and then WebRTC application 1 of home terminal 1 initiates a call invite request to the WebRTC proxy by using a Socket connection, where the call invite request carries an internal terminal number of home terminal 2; after the call invite request, the WebRTC proxy initiates a call request to home terminal 2 by using a Socket connection to home terminal 2 and according to the internal terminal number that is of home terminal 2 and in the call invite request; a user of home terminal 2 opts to accept the call and responds, thereby establishing a video communication media stream between the WebRTC proxy and WebRTC application 2 of home terminal 2. Video communication between the WebRTC proxy and WebRTC application 1 is not disconnected, and therefore, the WebRTC proxy receives a video communication media stream from home terminal 1, a video communication media stream from home terminal 2, and a video communication media stream from another home terminal that participates in video communication, and the WebRTC combines, by means of re-encoding, the received video communication media streams, and then sends a combined video communication media stream to a video communication peer end, which can avoid that the video communication peer end needs to decode two or more media streams. The Socket connection described in this embodiment may be a websocket WebSocket connection.

It can be seen from the foregoing description that in the foregoing embodiment, a home terminal performs multi-endpoint video communication within a home by using a WebRTC application, a Socket connection, and a WebRTC proxy of a home server, so that a user terminal in the home only needs a browser for web-based real time communication to implement video communication, and does not need to particularly install a dedicated video communication client to implement video communication.

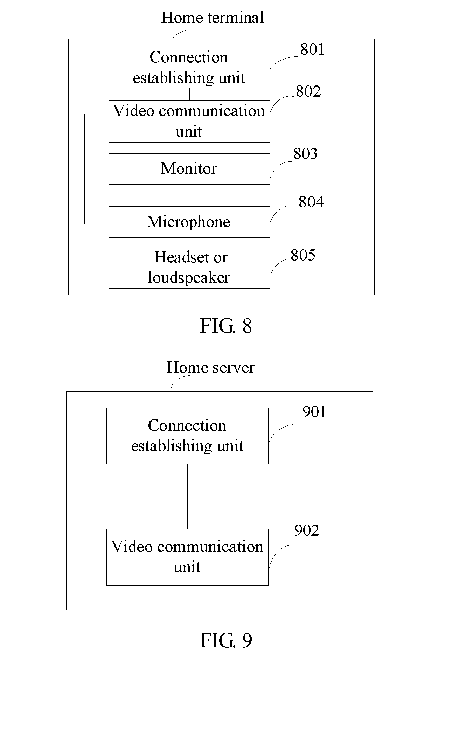

As shown in FIG. 8, FIG. 8 is a schematic diagram of a home terminal according to an embodiment of the present invention. The home terminal includes a connection establishing unit 801, a video communication unit 802, a monitor 803, a microphone 804, and a headset or loudspeaker 805. The connection establishing unit 801 is configured to send a detection message to a home server, where the detection message carries user account information, receive a video communication homepage returned by the home server, and establish a websocket Socket connection to the home server by using the video communication homepage and a browser that supports web-based real time communication; the video communication unit 802 is configured to interact with a WebRTC proxy of the home server by using a web-based real time communication WebRTC application and by means of the Socket connection, so as to perform video communication; the monitor 803 is connected to the video communication processing unit, and is configured to display video information that is of a video communication peer end and processed by the video communication processing unit to a user of the home terminal; the microphone 804 is connected to the video communication processing unit, and is configured to transmit audio information of the user of the home terminal to the video communication processing unit in a video communication process; and the headset or loudspeaker 805 is connected to the video communication processing unit, and is configured to play audio information that is of the video communication peer end and processed by the video communication processing unit to the user of the home terminal.

That the video communication unit 802 interacts with the WebRTC proxy of the home server by using the web-based real time communication WebRTC application and by means of the Socket connection, so as to perform video communication is specifically that: the home terminal initiates a video communication call request to the WebRTC proxy of the home server by means of the Socket connection and according to a call number that is input by a user by using the WebRTC application, so that the WebRTC proxy of the home server invokes, by using an internal system, a triggered call signaling control module of the home server to initiate a video communication call, and the call signaling control module performs call connection; and when the WebRTC proxy module establishes a video communication media stream with the triggered call signaling control module, the triggered call signaling control module inversely triggers the WebRTC proxy to establish a video communication media stream within a home with the WebRTC application of the home terminal.

That the video communication unit 802 interacts with the WebRTC proxy of the home server by using the web-based real time communication WebRTC application and by means of the Socket connection, so as to perform video communication is specifically that: the home terminal receives, by using the WebRTC application and by means of the Socket connection, a video communication call initiated by means of triggering the WebRTC proxy module by using a signaling call module of the home server; the WebRTC application returns, to the WebRTC proxy according to a user response, information that a user responds to and answers the call, so that the WebRTC proxy invokes and triggers, by using an internal system, the call signaling control module to return user answer signaling, so as to establish a video communication media stream between the home terminal and the home server.

That the video communication unit 802 interacts with the WebRTC proxy of the home server by using the web-based real time communication WebRTC application and by means of the Socket connection, so as to perform video communication is specifically that: the home terminal initiates a video communication call request to the WebRTC proxy of the home server by means of the Socket connection and according to a call number that is input by a user by using the WebRTC application, where the video call communication request carries a number of a target home terminal to which a call is transferred, so that the WebRTC proxy of the home server invokes, by using an internal system, a triggered call signaling control module of the home server to initiate a video communication call to the target home terminal according to the number of the target home terminal; after a user of the target home terminal opts to accept the call and responds, the WebRTC proxy of the home server redirects a video communication media stream that points to the home terminal to the target home terminal.

That the video communication unit 802 interacts with the WebRTC proxy of the home server by using the web-based real time communication WebRTC application and by means of the Socket connection, so as to perform video communication is specifically that: the home terminal initiates a video communication call request to the WebRTC proxy of the home server by means of the Socket connection and according to a call number that is input by a user by using the WebRTC application, where the video call communication request carries a number of a target home terminal to which a call is transferred, so that the WebRTC proxy of the home server invokes, by using an internal system, a triggered call signaling control module of the home server to initiate a video communication call to the target home terminal according to the number of the target home terminal; after a user of the target home terminal opts to accept the call and responds, the WebRTC proxy of the home server receives a video communication media stream from the home terminal and a video communication media stream from the target terminal at the same time, and the WebRTC proxy module of the home server combines, by means of encoding, the video communication media stream from the home terminal and the video communication media stream from the target terminal, and then sends a combined video communication media stream to a video communication peer end.

The Socket connection described in this embodiment may be a websocket WebSocket connection.

It can be seen from the foregoing description that in the foregoing embodiment, a home terminal makes a video call to another terminal by using a WebRTC application, a Socket connection, and a WebRTC proxy of a home server, so that a user terminal in a home only needs a browser for web-based real time communication to implement video communication, and does not need to particularly install a dedicated video communication client to implement video communication.

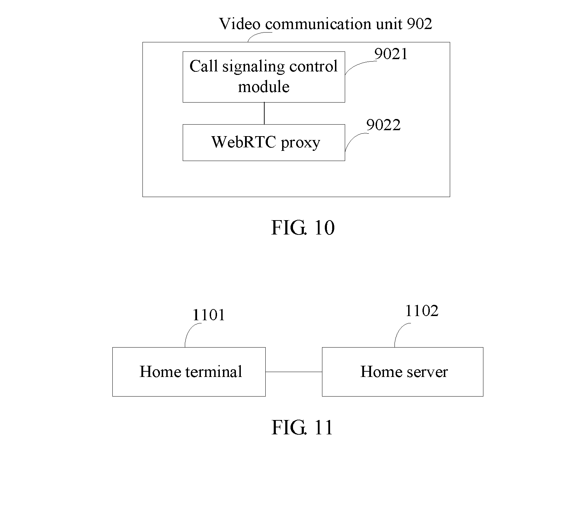

As shown in FIG. 9, FIG. 9 is a schematic diagram of a home server according to an embodiment of the present invention. The home terminal includes a connection establishing unit 901 and a video communication unit 902. The connection establishing unit 901 is configured to receive a detection message that carries user account information and is sent by a home terminal, perform matching on the received account information, and return a video communication homepage to the home terminal after the matching is successful, so that the home terminal establishes a websocket Socket connection to the home server by using the video communication homepage and a browser that supports web-based real time communication. As shown in FIG. 10, the video communication unit 902 includes a WebRTC proxy 9022, where the WebRTC proxy 9022 interacts with the home terminal by using a web-based real time communication WebRTC application and by means of the Socket connection, so as to perform video communication. The Socket connection described in this embodiment may be a websocket WebSocket connection.

As shown in FIG. 10, the video communication unit 902 further includes a call signaling control module 9021. The WebRTC proxy 9022 of the home server receives a video communication call request initiated by the home terminal by means of the Socket connection and according to a call number that is input by a user by using the WebRTC application, and invokes, by using an internal system, the triggered call signaling control module 9021 of the home server to initiate a video communication call, and the call signaling control module 9021 performs call connection; and when the WebRTC proxy 9022 establishes a video communication media stream with the triggered call signaling control module 9021, the triggered call signaling control module inversely triggers the WebRTC proxy 9022 to establish a video communication media stream within a home with the WebRTC application of the home terminal;
or,
the signaling call module 9021 of the home server triggers the WebRTC proxy 9022 to receive, by using the WebRTC application and by means of the Socket connection, a video communication call initiated to the home terminal; the WebRTC proxy 9022 receives information that a user responds to and answers the call, where the information is returned by the WebRTC application of the home terminal according to a user response; and the WebRTC proxy 9022 invokes and triggers, by using an internal system, the call signaling control module 9021 to return user answer signaling, so as to establish a video communication media stream between the home terminal and the home server;
or,
the WebRTC proxy 9022 of the home server receives a video communication call request initiated by the home terminal by means of the Socket connection and according to a call number that is input by a user by using the WebRTC application, where the video call communication request carries a number of a target home terminal to which a call is transferred; the WebRTC proxy 9022 of the home server invokes, by using an internal system, the triggered call signaling control module 9021 of the home server to initiate a video communication call to the target home terminal according to the number of the target home terminal; and after a user of the target home terminal opts to accept the call and responds, the WebRTC proxy 9022 of the home server redirects a video communication media stream that points to the home terminal to the target home terminal;
or,
the WebRTC proxy 9022 of the home server receives a video communication call request initiated by the home terminal by means of the Socket connection and according to a call number that is input by a user by using the WebRTC application, where the video call communication request carries a number of a target home terminal to which a call is transferred; the WebRTC proxy 9022 of the home server invokes, by using an internal system, the triggered call signaling control module 9021 of the home server to initiate a video communication call to the target home terminal according to the number of the target home terminal; and after a user of the target home terminal opts to accept the call and responds, the WebRTC proxy 9022 of the home server receives a video communication media stream from the home terminal and a video communication media stream from the target terminal at the same time, and the WebRTC proxy 9022 of the home server combines, by means of encoding, the video communication media stream from the home terminal and the video communication media stream from the target terminal, and then sends a combined video communication media stream to a video communication peer end.

It can be seen from the foregoing description that in the foregoing embodiment, a WebRTC proxy of a home server enables, by using a WebRTC application and a Socket connection that is established to a home terminal, the home terminal to perform video communication with another terminal, so that a user terminal in a home only needs a browser for web-based real time communication to implement video communication, and does not need to particularly install a dedicated video communication client to implement video communication.

As shown in FIG. 11, FIG. 11 is a schematic diagram of a home video communication system according to an embodiment of the present invention, where the home communication system includes a home terminal 1101 and a home server 1102. The home terminal 1101 sends a detection message to the home server 1102, where the detection message carries user account information of the home terminal; the home server 1102 receives the detection message that carries the user account information and is sent by the home terminal 1101; the home server 1102 performs matching on the account information, and returns a video communication homepage to the home terminal 1101 after the matching is successful; and the home terminal 1101 receives the video communication homepage returned by the home server 1102, and establishes a websocket Socket connection to the home server 1102 by using the video communication homepage and a browser that supports web-based real time communication.

The home terminal 1101 performs video communication with another terminal by using a web-based real time communication WebRTC application, by means of the Socket connection, and by using a WebRTC proxy of the home server 1102.

The Socket connection described in this embodiment may be a websocket WebSocket connection.

It can be seen from the foregoing description that in the foregoing embodiment, a home terminal interacts with a WebRTC proxy of a home server by using a WebRTC application and a Socket connection, so as to implement a video call, so that a user terminal in a home only needs a browser for web-based real time communication to implement a video call, and does not need to particularly install a dedicated video communication client to implement video communication.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for performing video communication in a home network, comprising:
sending, by a home terminal, a detection message to a home server, wherein the detection message carries user account information, receiving a video communication homepage returned by the home server, and establishing a socket Socket connection to the home server by using the video communication homepage and a browser that supports web-based real time communication WebRTC; and
performing, by the home terminal, video communication with another terminal by using a WebRTC application, by means of the Socket connection, and by using a WebRTC proxy of the home server.

2. The method according to claim 1, wherein the performing, by the home terminal, video communication with another terminal by using a web-based WebRTC application, by means of the Socket connection, and by using a WebRTC proxy of the home server is specifically:
initiating, by the home terminal, a video communication call request to the WebRTC proxy of the home server by means of the Socket connection and according to a call number that is input by a user by using the WebRTC application, so that the WebRTC proxy triggers a call signaling control module of the home server to initiate a video communication call and perform call connection; and
establishing, by the WebRTC application, a video communication media stream within a home with the WebRTC proxy by means of the Socket connection and according to a notification of the WebRTC proxy, wherein when establishing a video communication media steam with the call signaling control module, the WebRTC proxy instructs, according to triggering of the call signaling control module, the WebRTC application to establish the video communication media stream within the home with the WebRTC proxy.

3. The method according to claim 2, wherein when a format of the video communication media stream within the home is different from a format of a video communication media stream outside the home, the WebRTC proxy performs conversion from the format of the video communication media stream within the home to the format of the video communication media stream outside the home, or conversion from the format of the video communication media stream outside the home to the format of the video communication media stream within the home.

4. The method according to claim 1, wherein the performing, by the home terminal, video communication with another terminal by using a web-based WebRTC application, by means of the Socket connection, and by using a WebRTC proxy of the home server is specifically: receiving, by the home terminal by using the WebRTC application and by means of the Socket connection, a video communication call initiated by the WebRTC proxy, wherein the video communication call is initiated by means of triggering the WebRTC proxy by using a call signaling control module of the home server; and
returning, by the WebRTC application to the WebRTC proxy according to a user response, information that a user responds to the call, so that the WebRTC proxy invokes, by using an internal system, the call signaling control module to return user answer signaling to a caller, so as to establish a video communication media stream between the home terminal and the home server.

5. The method according to claim 1, wherein the performing, by the home terminal, video communication with another terminal by using a web-based WebRTC application, by means of the Socket connection, and by using a WebRTC proxy of the home server is specifically: initiating, by the home terminal, a video communication call request to the WebRTC proxy by means of the Socket connection and according to a call number that is input by a user by using the WebRTC application, wherein the video call communication request carries a number of a target home terminal to which a call is transferred, so that the WebRTC proxy redirects a video communication media stream that points to the home terminal to the target home terminal.

6. The method according to claim 1, wherein the performing, by the home terminal, video communication with another terminal by using a web-based WebRTC application, by means of the Socket connection, and by using a WebRTC proxy of the home server is specifically:
initiating, by the home terminal, a video communication call request to the WebRTC proxy by means of the Socket connection and according to a call number that is input by a user by using the WebRTC application, wherein the video call communication request carries a number of a target home terminal to which a call is transferred, so that the WebRTC proxy of the home server triggers a call signaling control module to initiate a video communication call to the target home terminal according to the number of the target home terminal; after a user of the target home terminal opts to accept the call and responds, receiving, by the WebRTC proxy module, a video communication media stream from the home terminal and a video communication media stream from the target terminal at the same time, combining, by the WebRTC proxy by means of encoding, the video communication media stream from the home terminal and the video communication media stream from the target terminal, and then sending to a video communication peer end.

7. A video communication method, comprising:
receiving, by a home server, a detection message that carries user account information and is sent by a home terminal, performing, by the home server, matching on the account information, and returning a video communication homepage to the home terminal after the matching is successful, so that the home terminal establishes a socket Socket connection to the home server by using the video communication homepage and a browser that supports web-based real time communication; and
enabling, by a WebRTC proxy of the home server by using a web-based real time communication WebRTC application and by means of the Socket connection, the home terminal to perform video communication with another terminal.

8. The method according to claim 7, wherein the enabling, by a WebRTC proxy of the home server by using a web-based real time communication WebRTC application and by means of the Socket connection, the home terminal to perform video communication with another terminal is specifically:
receiving, by the WebRTC proxy, a video communication call request of the home terminal, wherein the video communication call request is initiated by means of the Socket connection and according to a call number that is input by a user by using the WebRTC application;
triggering, by the WebRTC proxy, a call signaling control module to initiate a video communication call and perform call connection; and
when the call signaling control module establishes a video communication media stream with the WebRTC proxy, establishing, by the WebRTC proxy, a video communication media stream within a home with the WebRTC application of the home terminal according to triggering of the call signaling control module.

9. The method according to claim 8, wherein when a format of the video communication media stream within the home is different from a format of a video communication media stream outside the home, the WebRTC proxy performs conversion from the format of the video communication media stream within the home to the format of the video communication media stream outside the home, or conversion from the format of the video communication media stream outside the home to the format of the video communication media stream within the home.

10. The method according to claim 7, wherein the enabling, by a WebRTC proxy of the home server by using a web-based real time communication WebRTC application and by means of the Socket connection, the home terminal to perform video communication with another terminal is specifically:
initiating, by the WebRTC proxy, a video communication call to the home terminal according to triggering of a signaling call module, and triggering, by the call signaling module, the WebRTC proxy after receiving the video communication call initiated to the home terminal;
triggering, by the WebRTC proxy according to call answer information returned by the WebRTC application of the home terminal, the call signaling control module to return user answer signaling, so as to establish a video communication media stream between the home terminal and the home server, wherein the call answer information returned by the WebRTC application is returned by the WebRTC application according to a user response; and
when the call signaling control module establishes a video communication media stream with the WebRTC proxy, establishing, by the WebRTC proxy, a video communication media stream within a home with the WebRTC application of the home terminal according to triggering of the call signaling control module.

11. The method according to claim 7, wherein the enabling, by a WebRTC proxy of the home server by using a web-based real time communication WebRTC application and by means of the Socket connection, the home terminal to perform video communication with another terminal is specifically:
receiving, by the WebRTC proxy, a video communication call request of the home terminal, wherein the video communication call request is initiated by means of the Socket connection and according to a call number that is input by a user by using the WebRTC application, and the video call communication request carries a number of a target home terminal to which a call is transferred;
initiating, by the WebRTC proxy, a video communication call to the target home terminal according to the number of the target home terminal; and
redirecting, by the WebRTC proxy after receiving a message indicating that a user of the target home terminal opts to accept the call and responds, a video communication media stream that points to the home terminal to the target home terminal.

12. The method according to claim 7, wherein the enabling, by a WebRTC proxy of the home server by using a web-based real time communication WebRTC application and by means of the Socket connection, the home terminal to perform video communication with another terminal is specifically: receiving, by the WebRTC proxy, a video communication call request of the home terminal, wherein the video communication call request is initiated by means of the Socket connection and according to a call number that is input by a user by using the WebRTC application, and the video call communication request carries a number of a target home terminal to which a call is transferred;
initiating, by the WebRTC proxy, a video communication call to the target home terminal according to the number of the target home terminal; and
receiving, by the WebRTC proxy, a video communication media stream from the home terminal and a video communication media stream from the target terminal at the same time after receiving a message indicating that a user of the target home terminal opts to accept the call and responds, combining, by means of encoding, the video communication media stream from the home terminal and the video communication media stream from the target terminal, and then sending a combined video communication media stream to a video communication peer end.

13. A home terminal, comprising:
a connection establishing unit, configured to send a detection message to a home server, wherein the detection message carries user account information, receive a video communication homepage returned by the home server, and establish a socket Socket connection to the home server by using the video communication homepage and a browser that supports web-based real time communication;
a video communication processing unit, configured to perform video communication with another terminal by using a web-based real time communication WebRTC application, by means of the Socket connection, and by using a WebRTC proxy of the home server;
a monitor, which is connected to the video communication processing unit, and is configured to display video information that is of a video communication peer end and processed by the video communication processing unit to a user of the home terminal;
a microphone, which is connected to the video communication processing unit, and is configured to transmit audio information of the user of the home terminal to the video communication processing unit in a video communication process; and
a headset or loudspeaker, which is connected to the video communication processing unit, and is configured to play audio information that is of the video communication peer end and processed by the video communication unit to the user of the home terminal.

14. The home terminal according to claim 13, wherein that the video communication unit performs video communication with another terminal by using the web-based real time communication WebRTC application, by means of the Socket connection, and by using the WebRTC proxy of the home server is specifically that:
the home terminal initiates a video communication call request to the WebRTC proxy of the home server by means of the Socket connection and according to a call number that is input by a user by using the WebRTC application, so that the WebRTC proxy triggers a call signaling control module of the home server to initiate a video communication call and perform call connection; and
the WebRTC application establishes a video communication media stream within a home with the WebRTC proxy by means of the Socket connection and according to a notification of the WebRTC proxy, wherein when the WebRTC proxy establishes a video communication media steam with the call signaling control module, the WebRTC proxy instructs, according to triggering of the call signaling control module, the WebRTC application to establish the video communication media stream within the home with the WebRTC proxy;
or,
the home terminal receives, by using the WebRTC application and by means of the Socket connection, a video communication call initiated by the WebRTC proxy, wherein the video communication call is initiated by means of triggering the WebRTC proxy by using a call signaling control module of the home server; and
the WebRTC application returns, to the WebRTC proxy according to a user response, information that a user responds to the call, so that the WebRTC proxy invokes, by using an internal system, the call signaling control module to return user answer signaling to a caller, so as to establish a video communication media stream between the home terminal and the home server;
or,
the home terminal initiates a video communication call request to the WebRTC proxy by means of the Socket connection and according to a call number that is input by a user by using the WebRTC application, wherein the video call communication request carries a number of a target home terminal to which a call is transferred, so that the WebRTC proxy redirects a video communication media stream that points to the home terminal to the target home terminal;
or,
the home terminal initiates a video communication call request to the WebRTC proxy by means of the Socket connection and according to a call number that is input by a user by using the WebRTC application, wherein the video call communication request carries a number of a target home terminal to which a call is transferred, so that the WebRTC proxy of the home server triggers a call signaling control module to initiate a video communication call to the target home terminal according to the number of the target home terminal; after a user of the target home terminal opts to accept the call and responds, the WebRTC proxy module receives a video communication media stream from the home terminal and a video communication media stream from the target terminal at the same time, and the WebRTC proxy combines, by means of encoding, the video communication media stream from the home terminal and the video communication media stream from the target terminal, and then sends a combined video communication media stream to a video communication peer end.

15. A home server, comprising:
a connection establishing unit, configured to receive a detection message that carries user account information and is sent by a home terminal, perform matching on the received account information, and return a video communication homepage to the home terminal after the matching is successful, so that the home terminal establishes a socket Socket connection to the home server by using the video communication homepage and a browser that supports web-based real time communication; and
a video communication unit, comprising a WebRTC proxy, wherein the WebRTC proxy enables, by using a web-based real time communication WebRTC application and by means of the Socket connection, the home terminal to perform video communication with another terminal.

16. The home server according to claim 15, wherein the video communication unit further comprises a call signaling control module, and the WebRTC proxy receives a video communication call request of the home terminal, wherein the video communication call request is initiated by means of the Socket connection and according to a call number that is input by a user by using the WebRTC application; the WebRTC proxy triggers the call signaling control module to initiate a video communication call and perform call connection; and when the WebRTC proxy establishes a video communication media stream with the call signaling control module, the WebRTC proxy establishes a video communication media stream within a home with the WebRTC application of the home terminal according to triggering of the call signaling control module;
or,
the WebRTC proxy initiates a video communication call to the home terminal according to triggering of a signaling call module, and after receiving the video communication call initiated to the home terminal, the call signaling module triggers the WebRTC proxy; the WebRTC proxy triggers, according to call answer information returned by the WebRTC application of the home terminal, a call signaling control module to return user answer signaling, so as to establish a video communication media stream between the home terminal and the home server, wherein the call answer information returned by the WebRTC application is returned by the WebRTC application according to a user response; and when the call signaling control module establishes a video communication media stream with the WebRTC proxy, the WebRTC proxy establishes a video communication media stream within a home with the WebRTC application of the home terminal according to triggering of the call signaling control module;
or,
the WebRTC proxy receives a video communication call request of the home terminal, wherein the video communication call request is initiated by means of the Socket connection and according to a call number that is input by a user by using the WebRTC application, and the video call communication request carries a number of a target home terminal to which a call is transferred; the WebRTC proxy initiates a video communication call to the target home terminal according to the number of the target home terminal; and after receiving a message indicating that a user of the target home terminal opts to accept the call and responds, the WebRTC proxy redirects a video communication media stream that points to the home terminal to the target home terminal;
or,
the WebRTC proxy receives a video communication call request of the home terminal, wherein the video communication call request is initiated by means of the Socket connection and according to a call number that is input by a user by using the WebRTC application, and the video call communication request carries a number of a target home terminal to which a call is transferred; the WebRTC proxy initiates a video communication call to the target home terminal according to the number of the target home terminal; and after receiving a message indicating that a user of the target home terminal opts to accept the call and responds, the WebRTC proxy receives a video communication media stream from the home terminal and a video communication media stream from the target terminal at the same time, combines, by means of encoding, the video communication media stream from the home terminal and the video communication media stream from the target terminal, and then sends a combined video communication media stream to a video communication peer end.

17. A home video communication system, comprising a home terminal and a home server, wherein the home terminal sends a detection message to the home server, wherein the detection message carries user account information; the home server receives the detection message that carries the user account information and is sent by the home terminal; the home server performs matching on the account information, and returns a video communication homepage to the home terminal after the matching is successful; and the home terminal receives the video communication homepage returned by the home server, and establishes a socket Socket connection to the home server by using the video communication homepage and a browser that supports web-based real time communication; and
the home terminal performs video communication with another terminal by using a web-based real time communication WebRTC application, by means of the Socket connection, and by using a WebRTC proxy of the home server.
